(19) Europäisches Patentamt
European Patent Office
Office européen des brevets

(11) **EP 4 393 985 A1**

(12) **EUROPEAN PATENT APPLICATION**
published in accordance with Art. 153(4) EPC

(43) Date of publication:
**03.07.2024 Bulletin 2024/27**

(21) Application number: **22860890.7**

(22) Date of filing: **09.05.2022**

(51) International Patent Classification (IPC):
**C08J 5/18** (2006.01)     **B32B 27/00** (2006.01)
**B32B 27/34** (2006.01)     **B65D 65/40** (2006.01)
**C08L 77/00** (2006.01)

(52) Cooperative Patent Classification (CPC):
**B32B 27/00; B32B 27/34; B65D 65/40; C08J 5/18; C08L 77/00**

(86) International application number:
**PCT/JP2022/019718**

(87) International publication number:
**WO 2023/026593 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.08.2021 JP 2021135606**

(71) Applicant: **MITSUBISHI GAS CHEMICAL COMPANY, INC.**
**Chiyoda-ku**
**Tokyo 100-8324 (JP)**

(72) Inventors:
• **YAMASHITA, Momoko**
  **Hiratsuka-shi, Kanagawa 254-0016 (JP)**
• **OGURO, Hatsuki**
  **Hiratsuka-shi, Kanagawa 254-0016 (JP)**
• **MIYABE, Takanori**
  **Hiratsuka-shi, Kanagawa 254-0016 (JP)**
• **ODA, Takafumi**
  **Hiratsuka-shi, Kanagawa 254-0016 (JP)**

(74) Representative: **Vossius & Partner**
**Patentanwälte Rechtsanwälte mbB**
**Siebertstrasse 3**
**81675 München (DE)**

(54) **STRETCHED FILM, MULTILAYERED FILM, AND PACKAGING MATERIAL**

(57)     Provided is a stretched film including a polyamide resin, having excellent transparency, a multilayer film, and a packaging material. The stretched film includes a polyamide resin (a1) and a polyamide resin (a2), in which the polyamide resin (a1) includes a diamine-derived structural unit and a dicarboxylic acid-derived structural unit, 70 mol% or more of the diamine-derived structural unit being derived from xylylenediamine, 70 mol% or more of the dicarboxylic acid-derived structural unit being derived from sebacic acid, and the polyamide resin (a2) includes 35 mol% or more of all structural units each having a structural unit having a linear alkylene group that is derived from a monomer having 5 to 7 carbon atoms. A mass ratio of the polyamide resin (a1) to the polyamide resin (a2) is from 5/95 to 30/70.

FIG. 1

**Description**

Technical Field

The present invention relates to a stretched film, a multilayer film, and a packaging material.

Background Art

In the related art, a film including a polyamide resin having a structural unit derived from xylylenediamine has characteristics such as excellent oxygen gas barrier properties and heat resistance and high film strength. Unstretched films and stretched films made of aliphatic polyamides represented by polyamide 6 and polyamide 66 are excellent in impact resistance and bending fatigue resistance and are widely used as various packaging materials.

Meanwhile, Patent Document 1 describes that a film including a polyamide resin having a structural unit derived from xylylenediamine has an issue that pinholes are likely to occur. It is described that the occurrence of pinholes in a product packaging material causes contamination due to leakage of contents, putrefaction of the contents, generation of mold, and the like, leading to a decrease in product value.

In addition, Patent Document 1 discloses, based on recent attention to utilization of biomass, a biaxially stretched polyamide film in which a resin layer (layer B) mainly containing an aliphatic polyamide resin is laminated on at least one surface of a resin layer (layer A) mainly containing a m-xylylene group-containing-polyamide polymer that has m-xylylenediamine or a mixed xylylenediamine containing m-xylylenediamine and p-xylylenediamine, as a main diamine component, and that has an a, ω-aliphatic dicarboxylic acid component having 6 to 12 carbon atoms, as a main dicarboxylic acid component, in which the biaxially stretched polyamide film satisfies the following requirements (1) to (3):

(1) the resin layer (layer A) mainly containing the m-xylylene group-containing-polyamide polymer contains 70 mass% or more of the m-xylylene group-containing-polyamide polymer;
(2) the resin layer (layer B) mainly containing the aliphatic polyamide resin contains at least 99 to 60 mass% of polyamide 6 and 1 to 34 mass% of a polyamide polymerized from a biomass-derived raw material; and
(3) a thickness of the layer A is 10% or more and 30% or less of a total thickness of the layer A and the layer B.

Patent Document 2 describes a polyamide-based resin composition obtained by blending a mixture of a specific aromatic polyamide and an aliphatic polyamide with a specific amount of a modified polyolefin relative to the aromatic polyamide, and a polyamide-based resin stretched film obtained by forming the polyamide-based resin composition into a substantially non-oriented unstretched sheet by a melt extrusion method, then stretching the sheet at least in a uniaxial direction, and heat-setting the sheet.

Citation List

Patent Documents

Patent Document 1: WO 2021/070500
Patent Document 2: JP 05-051525 A

Summary of Invention

Technical Problem

As described above, a stretched film containing polyamide 6 is excellent in impact resistance and bending fatigue resistance, but has issues such as a large shrinkage rate and a high water absorption rate. Thus, in order to improve various performances, it is conceivable to improve the performance of a stretched film by blending another polyamide resin with polyamide 6 or the like. However, it has been found that, for example, when a resin layer mainly containing an aliphatic polyamide resin, that is, a resin layer in which polyamide 11, polyamide 1010, or the like is blended with polyamide 6 as described in Patent Document 1 is used, transparency of the obtained stretched film is poor.

An object of the present invention is to solve such issues and to provide a stretched film containing a polyamide resin and having excellent transparency, a multilayer film, and a packaging material.

Solution to Problem

In view of the above issue, the present inventor has studied blending a polyamide resin having a structural unit derived from xylylenediamine with a polyamide resin having high flexibility, that is, a polyamide resin in which 35 mol% or more of all structural units is a structural unit having a linear alkylene group. When a polyamide resin having a structural unit derived from xylylenediamine is blended with a polyamide resin in which 35 mol% or more of all structural units is a structural unit having a linear alkylene group, achieving performances such as a decrease in water absorption rate and a decrease in shrinkage rate of a stretched film can be expected. However, it has been found that, when metaxylylene adipamide (MXD6), which is a typical example of polyamide resin having a structural unit derived from xylylenediamine, is blended with polyamide 6, the transparency is lowered.

Under such circumstances, the present inventor has found that a stretched film having excellent transparency can be obtained by using a polyamide resin having a relatively long aliphatic chain of a dicarboxylic acid component as a polyamide resin having a structural unit derived from xylylenediamine, and using a polyamide resin having a relatively short aliphatic chain as a polyamide resin having high flexibility, thereby completing the present invention.

Specifically, the problems described above are solved by the following solutions.

<1> A stretched film including a polyamide resin (a1) and a polyamide resin (a2), in which the polyamide resin (a1) includes a diamine-derived structural unit and a dicarboxylic acid-derived structural unit, 70 mol% or more of the diamine-derived structural unit being derived from xylylenediamine, 70 mol% or more of the dicarboxylic acid-derived structural unit being derived from sebacic acid, and the polyamide resin (a2) includes 35 mol% or more of all structural units each including a structural unit having a linear alkylene group that is derived from a monomer having 5 to 7 carbon atoms, in which a mass ratio of the polyamide resin (a1) to the polyamide resin (a2) is from 5/95 to 30/70.

<2> The stretched film according to <1>, in which the structural unit having a linear alkylene group in the polyamide resin (a2) is at least one selected from $-[NH(CH_2)_{n1}CO]-$, $-[NH(CH_2)_{n2}NH]-$, and $-[CO(CH_2)_{n3}CO]-$, where n1 is an integer from 4 to 6, n2 is an integer from 5 to 7, and n3 is an integer from 3 to 5.

<3> The stretched film according to <1> or <2>, in which the polyamide resin (a1) includes the diamine-derived structural unit and the dicarboxylic acid-derived structural unit, 70 mol% or more of the diamine-derived structural unit being derived from m-xylylenediamine.

<4> The stretched film according to any one of <1> to <3>, in which the polyamide resin (a2) includes polyamide 6.

<5> The stretched film according to any one of <1> to <4>, in which the polyamide resin (a2) includes polyamide 6/66.

<6> The stretched film according to any one of <1> to <5>, in which a mass ratio of the polyamide resin (a1) to the polyamide resin (a2) is from 5/95 to 19/81.

<7> The stretched film according to any one of <1> to <6>, which is a uniaxially stretched film.

<8> The stretched film according to any one of <1> to <6>, which is a biaxially stretched film.

<9> The stretched film according to <7> or <8>, which is an easily tearable film.

<10> A multilayer film including the stretched film according to any one of <7> to <9> and an other layer.

<11> The multilayer film according to <10>, in which the other layer includes a sealant layer.

<12> The multilayer film according to <11>, in which the other layer includes a barrier layer, and the sealant layer, the stretched film, and the barrier layer are stacked in this order, the stretched film being a biaxially stretched film.

<13> The multilayer film according to <10>, in which the other layer comprises a barrier layer, the barrier layer including an oxygen barrier resin including a diamine-derived structural unit and a dicarboxylic acid-derived structural unit, 70 mol% or more of the diamine-derived structural unit being derived from xylylenediamine, 70 mol% or more of the dicarboxylic acid-derived structural unit being derived from adipic acid, the stretched film includes polyamide 6 and a polyamide resin having a diamine-derived structural unit and a dicarboxylic acid-derived structural unit, 70 mol% or more of the diamine-derived structural unit being derived from m-xylylenediamine, and the barrier layer is in contact with the stretched film.

<14> The multilayer film according to <13>, in which the barrier layer and the stretched film are stretched at the same stretch ratio.

<15> A packaging material including the stretched film according to any one of <1> to <9> or the multilayer film according to any one of <10> to <14>.

Advantageous Effects of Invention

The present invention has made it possible to provide a stretched film containing a polyamide resin and having excellent transparency, a multilayer film, and a packaging material.

Brief Description of Drawings

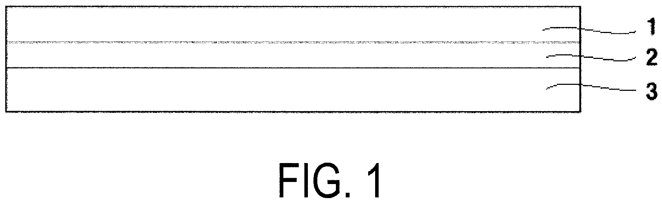

FIG. 1 is a cross-sectional view illustrating an example of an embodiment of a multilayer film of the present invention.

Description of Embodiments

Hereinafter, embodiments for carrying out the present invention (referred to simply as "the present embodiments" below) will be described in detail. Note that the following embodiments are examples for describing the present invention, and the present invention is not limited to these embodiments.

In the present specification, "from ... to ..." or "of ... to ..." is used to mean that the numerical values described before and after "to" are included as the lower limit and the upper limit, respectively.

In the present specification, various physical property values and characteristic values are values at 23°C unless otherwise noted.

The term "film" in the present specification refers to a generally flat formed product that has a thin thickness relative to its length and width, and includes a "sheet". In addition, the term "film" in the present specification may have a single layer or multiple layers.

When a standard, a measurement method, or the like set forth in the present specification differs depending on the year, it is based on the standard as of January 1, 2021, unless otherwise stated.

A stretched film of the present embodiments is a stretched film including a polyamide resin (a1) and a polyamide resin (a2), and the stretched film is characterized in that the polyamide resin (a1) includes a diamine-derived structural unit and a dicarboxylic acid-derived structural unit, 70 mol% or more of the diamine-derived structural unit is derived from xylylenediamine, 70 mol% or more of the dicarboxylic acid-derived structural unit is derived from sebacic acid, and the polyamide resin (a2) includes 35 mol% or more of all structural units each including a structural unit having a linear alkylene group that is derived from a monomer having 5 to 7 carbon atoms, and a mass ratio of the polyamide resin (a1) to the polyamide resin (a2) is from 5/95 to 30/70.

Through such a configuration, a stretched film having excellent transparency is obtained.

The polyamide resin (a2) is a polyamide resin in which 35 mol% or more of all structural units is a structural unit having a linear alkylene group, and it has relatively high flexibility. A typical example includes polyamide 6. However, when MXD6, which is a representative example of a polyamide resin having a structural unit derived from xylylenediamine, is blended with polyamide 6 as described in Patent Document 2, transparency is deteriorated. The reason for this is presumed to be that a difference in refractive index between the two is large, and irregular reflection of light occurs. Even when polyamide 11 or polyamide 1010 as described in Patent Document 1 is blended with polyamide 6, the transparency is deteriorated. The reason for this is presumed to be that a difference in SP value between polyamide 6 and polyamide 11 or polyamide 1010 is large and polyamide 11 or polyamide 1010 is not easily dispersed in polyamide 6.

In the present embodiments, a polyamide resin (a1) in which 70 mol% or more of a diamine-derived structural unit is derived from xylylenediamine and 70 mol% or more of a dicarboxylic acid-derived structural unit is derived from sebacic acid is blended at a predetermined ratio with a polyamide resin (a2) in which 35 mol% or more of all structural units is a structural unit having a linear alkylene group, and the structural unit having a linear alkylene group in the polyamide resin (a2) is derived from a monomer having 5 to 7 carbon atoms. As described above, it is presumed that the polyamide resin (a1) can be finely dispersed in the polyamide resin (a2) by adopting a configuration in which a difference in length between an aliphatic chain contained in the polyamide resin (a1) and an aliphatic chain contained in the polyamide resin (a2) exists, and that a stretched film having excellent transparency and hardly causing irregular reflection of light can be obtained.

<Polyamide resin (a1)>

The stretched film of the present embodiments contains the polyamide resin (a1). By containing the polyamide resin (a1), various functions including imparting low water absorbency, imparting easy tearability, and reducing a shrinkage rate of the stretched film, can be imparted to the stretched film.

The polyamide resin (a1) includes a diamine-derived structural unit and a dicarboxylic acid-derived structural unit, 70 mol% or more of the diamine-derived structural unit is derived from xylylenediamine, and 70 mol% or more of the dicarboxylic acid-derived structural unit is derived from sebacic acid.

In the polyamide resin (a1), 70 mol% or more, preferably 80 mol% or more, more preferably 90 mol% or more, still more preferably 95 mol% or more, and even more preferably 99 mol% or more of the diamine-derived structural unit is derived from xylylenediamine. The upper limit is 100 mol%. In the xylylenediamine, preferably 80 mol% or more, more preferably 90 mol% or more, still more preferably 95 mol% or more, and even more preferably 99 mol% or more are m-xylylenediamine and/or p-xylylenediamine. In the m-xylylenediamine and/or p-xylylenediamine, a mixing molar ratio of m-xylylenediamine and p-xylylenediamine is preferably 50 to 100:50 to 0, more preferably 60 to 100:40 to 0, still more preferably 65 to 100:35 to 0, even more preferably 70 to 100:30 to 0, and further may be 80 to 100:20 to 0, 90 to 100:10 to 0, or 95 to 100:5 to 0.

When the ratio of p-xylylenediamine increases, a rate of amidification reaction of the polyamide resin (a1) increases, and therefore, there is an advantage in terms of production of the resin, for example, a time required to reach a target relative viscosity can be shortened; however, when the ratio of p-xylylenediamine is the above ratio or more, the melting point increases and a difference in melting point from the polyamide resin (a2) increases, so that moldability tends to be deteriorated. When a mixing ratio of m-xylylenediamine and p-xylylenediamine is in the above range, the production aspect of the polyamide resin (a1) itself and the production aspect of the stretched film containing the polyamide resin (a1) and the polyamide resin (a2) are improved.

Examples of the diamine other than xylylenediamine include aromatic diamines such as para-phenylenediamine, and aliphatic diamines, such as 1,3-bis(aminomethyl)cyclohexane, 1,4-bis(aminomethyl)cyclohexane, tetramethylene diamine, pentamethylene diamine, hexamethylene diamine, octamethylene diamine, and nonamethylene diamine. A single type of these other diamines may be used, or two or more types thereof may be used.

In the polyamide resin (a1), 70 mol% or more, preferably 80 mol% or more, more preferably 90 mol% or more, still more preferably 95 mol% or more, and even more preferably 99 mol% or more of the dicarboxylic acid-derived structural unit is derived from sebacic acid. The upper limit is 100 mol%.

The use of sebacic acid has the advantage of being a bio-based resin derived from castor oil, and a carbon neutral material useful for sustainable societies.

The dicarboxylic acid-derived structural unit may contain a dicarboxylic acid other than sebacic acid. Examples of other dicarboxylic acids include $\alpha,\omega$-linear aliphatic dicarboxylic acids other than sebacic acid, such as malonic acid, succinic acid, glutaric acid, adipic acid, suberic acid, azelaic acid, and dodecanedioic acid; phthalic acid compounds, such as isophthalic acid, terephthalic acid, and ortho-phthalic acid; and naphthalenedicarboxylic acids, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid, and one of these can be used alone, or two or more can be used in combination.

In the present embodiments, in particular, it is preferable that the polyamide resin (a1) includes a diamine-derived structural unit and a dicarboxylic acid-derived structural unit, 70 mol% or more of the diamine-derived structural unit is derived from m-xylylenediamine, and 70 mol% or more of the dicarboxylic acid-derived structural unit is derived from sebacic acid.

In the present embodiments, the polyamide resins (a1) may be partially or entirely synthesized from biomass. For example, sebacic acid which is a biomass monomer using castor oil as a raw material can be used.

Here, a structural unit constituting a polyamide resin may include a diamine-derived structural unit, a dicarboxylic acid-derived structural unit, a terminal group, and other structural units within a range not departing from the gist of the present invention. Examples of other structural units include structural units derived from, for example, a lactam such as $\epsilon$-caprolactam, valerolactam, laurolactam, and undecalactam, or from an aminocarboxylic acid such as 11-aminoundecanoic acid and 12-aminododecanoic acid. In addition, in the polyamide resin used in the present embodiments, usually 95 mass% or more, preferably 98 mass% or more, and more preferably 99 mass% or more of the structural units excluding the terminal group includes a dicarboxylic acid-derived structural unit and a diamine-derived structural unit.

The lower limit of the relative viscosity of the polyamide resin (a1) is preferably 2.1 or more, more preferably 2.3 or more, still more preferably 2.5 or more. Meanwhile, the upper limit of the relative viscosity of the polyamide resin (a1) is preferably 4.0 or less, more preferably 3.9 or less, still more preferably 3.8 or less.

The relative viscosity of the polyamide resin (a1) is measured under the conditions of JIS K 69020-2.

<Polyamide resin (a2)>

The stretched film of the present embodiments contains a polyamide resin (a2). The polyamide resin (a2) usually accounts for the main component of the stretched film. By using such a polyamide resin, a stretched film having excellent flexibility tends to be obtained. In addition, a stretched film having excellent impact resistance and pinhole resistance tends to be obtained.

In the polyamide resin (a2), 35 mol% or more of all structural units is a structural unit having a linear alkylene group and is a structural unit derived from a monomer having 5 to 7 carbon atoms.

Examples of the monomer include diamines, dicarboxylic acids, lactams, and aminocarboxylic acids.

In the polyamide resin (a2), of all structural units, 35 mol% or more, preferably 40 mol% or more, more preferably 50 mol% or more, still more preferably 60 mol% or more, even more preferably 70 mol% or more, further more preferably 80 mol% or more, still further more preferably 90 mol% or more, and particularly preferably 95 mol% or more are derived from the structural unit having a predetermined linear alkylene group. The upper limit is in a case where all structural units excluding the terminal groups are the above-mentioned predetermined linear alkylene groups. When the proportion of the linear alkylene group is large as described above, a stretched film having excellent flexibility can be obtained.

The structural unit having a linear alkylene group in the polyamide resin (a2) is derived from a monomer having 5 to 7 carbon atoms, and is preferably derived from a monomer having 6 carbon atoms.

Through such a configuration, the polyamide resin (a1) is not compatibilized with and easily dispersed in the polyamide resin (a2). As a result, it is presumed that high transparency can be maintained as a stretched film. Since the polyamide resins (a2) and (a1) are not compatibilized with each other and are phase-separated from each other as a matrix and a domain, a stretched film having excellent easy tearability can be obtained.

More specifically, the structural unit having a linear alkylene group in the present embodiments is preferably at least one or more selected from $-[NH(CH_2)_{n1}CO]-$, $-[NH(CH_2)_{n2}NH]-$, and $-[CO(CH_z)_nsCO]-$. Here, n1 is an integer from 4 to 6, preferably 5. n2 is an integer from 5 to 7, preferably 6. n3 is an integer from 3 to 5, preferably 4.

The polyamide resin (a2) is preferably an aliphatic polyamide resin. The aliphatic polyamide resin means that 50 mol% or more of all structural units excluding terminal groups is a structural unit derived from an aliphatic monomer. In the present embodiments, it is preferable that, of all structural units excluding terminal groups constituting the polyamide resin (a2), preferably 60 mol% or more, more preferably 70 mol% or more, still more preferably 80 mol% or more, even more preferably 90 mol% or more, further more preferably 95 mol% or more, and still further more preferably 99 mol% or more is the structural unit derived from an aliphatic monomer.

Examples of the polyamide resin (a2) include polyamide 6, polyamide 66, polyamide 46, polyamide 6/66 (copolymer containing a polyamide 6 component and a polyamide 66 component), polyamide 610, polyamide 612, polyamide 61, polyamide 6T, and polyamide 6I/6T, and polyamide 6, polyamide 66, polyamide 46, and polyamide 6/66 are preferable, polyamide 6, polyamide 66, and polyamide 6/66 are more preferable, polyamide 6 and polyamide 6/66 are still more preferable, and polyamide 6 is even more preferable.

Polyamide 6 is a ring-opening polymer of caprolactam, and may contain structural units derived from other monomers within a range not departing from the gist of the present invention (for example, 5 mass% or less, further 3 mass% or less, particularly 1 mass% or less of the whole). The same applies to other polyamide resins such as polyamide 66.

<Relationship between polyamide resin (a1) and polyamide resin (a2) >

In the stretched film of the present embodiments, the mass ratio of the polyamide resins (a1) and (a2) is from 5/95 to 30/70, and preferably from 5/95 to 19/81. When the amount of the polyamide resin (a1) is 5 or more, which is the lower limit, the shrinkage rate of the stretched film tends to be further reduced. When the content of the polyamide resin (a1) is 30 or less, which is the upper limit, there is a tendency that a decrease in oxygen-barrier properties can be effectively suppressed while the flexibility of the polyamide resin (a2) is maintained to some extent.

The mass ratio of the polyamide resin (a1) is preferably 6 or more, more preferably 8 or more, and still more preferably 10 or more, when the total of the polyamide resin (a1) and the polyamide resin (a2) is 100. The mass ratio of the polyamide resin (a1) is preferably 29 or less, more preferably 27 or less, still more preferably 25 or less, even more preferably 23 or less, further more preferably 20 or less, still further more preferably 19 or less, and particularly preferably 18 or less, when the total of the polyamide resin (a1) and the polyamide resin (a2) is defined as 100.

The total content of the polyamide resin (a1) and the polyamide resin (a2) in the stretched film of the present embodiments is preferably 85 mass% or more of the stretched film, more preferably 90 mass% or more, still more preferably 93 mass% or more, even more preferably 95 mass% or more, further more preferably 97 mass% or more, still further more preferably 99 mass% or more, particularly preferably 99.9 mass% or more, and more particularly preferably more than 99.9 mass%. The upper limit is 100 mass%.

The stretched film of the present embodiments may contain one type of the polyamide resin (a1) and one type of the polyamide resin (a2), or may contain two or more types of each. When two or more types are contained, the total amount thereof is preferably in the above range.

<Other component(s)>

In the stretched film of the present embodiments, in addition to the polyamide resins (a1) and (a2), another polyamide resin (a3) may be blended. Examples of other polyamide resins include semi-aromatic polyamide resins (excluding those corresponding to the polyamide resin (a1) or the polyamide resin (a2)), and xylylenediamine polyamide resins other than the polyamide resin (a1) are preferable.

Examples of the xylylenediamine polyamide resin other than the polyamide resin (a1) include a polyamide resin which has a diamine-derived structural unit and a dicarboxylic acid-derived structural unit, 70 mol% or more of the diamine-derived structural unit being derived from xylylenediamine (preferably m-xylylenediamine), and 70 mol% or more of the dicarboxylic acid-derived structural unit being derived from $\alpha,\omega$-linear aliphatic dicarboxylic acid having 4 to 8 carbon atoms (preferably 6 carbon atoms). A xylylenediamine polyamide resin in which a part (for example, 1 to 10 mol% of the dicarboxylic acid component) of the dicarboxylic acid component of the polyamide resin is isophthalic acid is also preferable.

Examples of the other polyamide resin (a3) also include polyamide 11, polyamide 12, polyamide 9T, and polyamide 10T.

When the stretched film of the present embodiments contains the other polyamide resin (a3), the content thereof is preferably 10 mass% or less of the stretched film, more preferably 5 mass% or less, and may be 1 mass% or less.

The stretched film of the present embodiments may contain only one type of the polyamide resin (a3) or may contain two or more types thereof. When two or more types are contained, the total amount thereof is preferably in the above range.

The stretched film of the present embodiments may contain a plasticizer, an elastomer, a polyolefin, an antioxidant, a heat stabilizer, an ultraviolet absorber, a light stabilizer, a lubricant, an inorganic filler, an antistatic agent, an antiblocking agent, a flame retardant, and the like. The content of these components is preferably 10 mass% or less of the stretched film.

One aspect of the present embodiments includes a stretched film containing substantially no elastomer. The phrase "containing substantially no elastomer" means that the content of the elastomer in the stretched film is, for example, less than 1 mass%, preferably less than 0.5 mass%. By containing substantially no elastomer, the effect of transparency is more effectively exhibited.

One aspect of the present embodiments includes a stretched film containing substantially no polyolefin. The phrase "containing substantially no polyolefin" means that the content of the polyolefin in the stretched film is, for example, less than 1 mass%, preferably less than 0.5 mass%, and more preferably less than 0.3 mass%. By containing substantially no polyolefin, the effect of transparency is more effectively exhibited.

<Stretching>

The stretched film of the present embodiments is obtained by stretching an unstretched polyamide resin film. The stretched film of the present embodiments may be a uniaxially stretched film obtained by uniaxial stretching or a biaxially stretched film obtained by biaxial stretching.

In the case of uniaxial stretching, the stretch ratio is preferably 1.1 times or more, more preferably 2.0 times or more, and still more preferably 3.0 times or more. The upper limit is not particularly limited, and is preferably 20.0 times or less.

In the case of biaxial stretching, the stretch ratio in each direction (TD and MD) is preferably 1.1 times or more, more preferably 2.0 times or more, and may be 3.0 times or more. The upper limit is not particularly limited, and is preferably 20.0 times or less. The total stretch ratio is preferably 1.5 times or more and 30.0 times or less.

The stretched film of the present embodiments is preferably an easily tearable film. In the case of the easily tearable film, the film may be either a biaxially stretched film or a uniaxially stretched film; however, when the film is uniaxially stretched, the polyamide resin (a1) is present in an elongated shape in the film, and a film having more excellent easy tearability can be obtained. The stretched film can also be used as a constituent layer of a multilayer film.

In the present embodiments, the polyamide resin (a1) is not completely compatibilized with the polyamide resin (a2) and can be sufficiently dispersed therein, and therefore the stretched film is preferably used as an easily tearable film.

When the stretched film of the present embodiments is a biaxially stretched film, the stretched film may be used as a single-layer film, and is preferably used as a constituent layer of a multilayer film. It is presumed that a good sea-island structure is formed by the polyamide resins (a1) and (a2) by biaxial stretching. That is, an island of the polyamide resin (a1) is formed in the sea of the polyamide resin (a2). As a result, an excellent stretched film having a low water absorption rate and a low shrinkage rate, which are characteristics of the polyamide resin (a1), and a multilayer film are obtained.

The unstretched polyamide film may be stretched as a multilayer film with another layer, or the unstretched polyamide film may be stretched and then bonded to another layer.

When the unstretched polyamide film is stretched, the stretching method can be referred to the descriptions in paragraphs [0049] to [0053] of WO 2017/010390, the contents of which are incorporated herein by reference.

The thickness (single-layer film) of the stretched film of the present embodiments is preferably 1 $\mu$m or more, more preferably 5 $\mu$m or more, still more preferably 10 um or more, and is preferably 200 $\mu$m or less, more preferably 100 $\mu$m or less.

The stretched film of the present embodiments preferably has a haze of less than 2.0%, more preferably less than 1.3%, and still more preferably less than 1.0%. The lower limit is ideally 0%, but 0.01% or more is practical.

The stretched film of the present embodiments preferably has a shrinkage ratio of less than 10.0%. The lower limit is ideally 0%, but 0.01% or more is practical.

The stretched film of the present embodiments preferably has a water absorption rate of less than 2.5%, more preferably less than 1.8%. The lower limit is ideally 0%, but 0.01% or more is practical.

In the stretched film of the present embodiments, an oxygen transmission coefficient is preferably less than 1.0 cc·mm/m$^2$·atm·day, and more preferably less than 0.52 cc·mm/m$^2$·atm·day. As the lower limit, 0 cc·mm/m$^2$·atm·day is ideal, but 0.01 cc·mm/m$^2$·atm·day or more is practical.

In the stretched film (preferably uniaxially stretched film) of the present embodiments, the number of pinholes after 3000 times of refraction is preferably 10 or less, more preferably 5 or less, still more preferably 1 or less per 100 cm$^2$ of the film. The lower limit of the number of pinholes is preferably 0.

The haze, the shrinkage rate, the water absorption rate, the oxygen permeability coefficient, and the number of pinholes are measured according to the description of Examples described later.

<Multilayer film>

The multilayer film of the present embodiments will be described.

The multilayer film of the present embodiments has a uniaxially stretched film or a biaxially stretched film and other layers.

Examples of the other layers include a polyolefin layer, an adhesive layer, a sealant layer, an oxygen barrier layer (barrier layer), an oxygen absorbing layer, an oxygen permeable layer, a metal deposited layer, and a design layer.

In the present embodiments, the other layer preferably includes a sealant layer.

In the present embodiments, the other layer preferably includes a barrier layer.

In the present embodiments, the other layer includes a sealant layer and a barrier layer, and the sealant layer, the stretched film of the present embodiments, and the barrier layer are stacked in this order, the stretched film being preferably a biaxially stretched film. The sealant layer and the stretched film, and the stretched film and the barrier layer may be in contact with each other, or may be in contact with each other with another layer interposed therebetween. When another layer is interposed, an adhesive layer is preferable. FIG. 1 illustrates an example of a cross-sectional view of the multilayer film of the present embodiments, in which reference numeral 1 indicates a sealant layer, reference numeral 2 indicates the stretched film of the present embodiments, and reference numeral 3 indicates a barrier layer.

In an example of the present embodiments, the sealant layer and the stretched film, and the stretched film and the barrier layer are in contact with each other.

In another example of the present embodiments, the sealant layer and the stretched film are in contact with each other with the adhesive layer interposed therebetween, and the stretched film and the barrier layer are in contact with each other.

The thickness of the multilayer film is, for example, 50 μm or more, and preferably 1000 μm or less, more preferably 500 μm or less, and still more preferably 300 um or less.

The multilayer film of the present embodiments may have only one or two or more other layers. The number of other layers is preferably 1 or more, more preferably 2 or more, and may be 3 or more, and is preferably 10 or less, more preferably 8 or less, and may be 5 or less.

The sealant layer preferably contains a polyolefin. The polyolefin may be either a homopolymer or a copolymer of α-olefin. Specific examples of the polyolefin include polyethylene, homopolypropylene, a propylene-ethylene random copolymer, and a propylene-ethylene block copolymer. A part of the polyolefin may be an acid-modified polyolefin. By using an acid-modified polyolefin, adhesiveness to the stretched film and the like can be further improved. The polyolefin may be a low density polyolefin. Furthermore, the polyolefin may be a bio-polyolefin. Examples of the bio-polyolefin include bio-low density polyethylene and bio-linear low density polyethylene.

The sealant layer contains polyolefin in an amount of preferably 80 mass% or more, more preferably 90 mass% or more, and still more preferably 95 mass% or more.

The polyolefin contained in the sealant layer may be one kind or two or more kinds, and when two or more kinds are contained, the total amount is preferably in the above range.

The sealant layer may contain components other than polyolefin within a range not departing from the gist of the present invention.

Additionally, as for the sealant layer, reference can be made to the disclosure of paragraph [0045] of WO 2015/083558, the contents of which are incorporated herein by reference.

When the multilayer film of the present embodiments has a sealant layer, the thickness thereof is preferably 10 μm or more, more preferably 20 μm or more, still more preferably 30 μm or more, and is preferably 200 μm or less, more preferably 100 um or less.

Examples of the barrier layer include a layer containing a barrier resin as a main component and a metal foil such as an aluminum foil, and the barrier layer is preferably a layer containing a barrier resin as a main component.

Specifically, the barrier layer is a layer in which the barrier resin accounts for preferably 60 mass% or more, more preferably 70 mass% or more, still more preferably 80 mass% or more, and even more preferably 90 mass% or more. The upper limit may be 100 mass%.

The barrier resin means a resin having an oxygen permeability of 100 cc/m$^2$·atm·day or less. Examples of an oxygen barrier resin include polyamide (such as MXD6), an ethylene-vinyl alcohol copolymer, and vinylidene chloride.

It is preferable that the polyamide resin as an oxygen barrier resin includes a diamine-derived structural unit and a dicarboxylic acid-derived structural unit, 70 mol% or more of the diamine-derived structural unit is derived from xylylenediamine, and 70 mol% or more of the dicarboxylic acid-derived structural unit is an oxygen barrier resin X derived from an α,ω-linear aliphatic dicarboxylic acid having 4 to 8 carbon atoms.

In the oxygen barrier resin X, preferably 80 mol% or more, more preferably 90 mol% or more, still more preferably 95 mol% or more, and even more preferably 99 mol% or more of the diamine-derived structural unit is derived from xylylenediamine. The upper limit is 100 mol%. In the xylylenediamine, preferably 80 mol% or more, more preferably 90 mol% or more, still more preferably 95 mol% or more, and even more preferably 99 mol% or more are preferably m-xylylenediamine and/or p-xylylenediamine, and are more preferably m-xylylenediamine.

Examples of the diamine other than xylylenediamine include aromatic diamines such as para-phenylenediamine, and aliphatic diamines, such as 1,3-bis(aminomethyl)cyclohexane, 1,4-bis(aminomethyl)cyclohexane, tetramethylene diamine, pentamethylene diamine, hexamethylene diamine, octamethylene diamine, and nonamethylene diamine. A single type of these other diamines may be used, or two or more types thereof may be used.

In the oxygen barrier resin X, preferably 75 mol% or more, more preferably 80 mol% or more, still more preferably 85 mol% or more, even more preferably 90 mol% or more, further more preferably 95 mol% or more, and still further more preferably 99 mol% or more of the dicarboxylic acid-derived structural unit is derived from an α,ω-linear aliphatic dicarboxylic acid having 4 to 8 carbon atoms. The upper limit is 100 mol%.

Examples of the α,ω-linear aliphatic dicarboxylic acid having 4 to 8 carbon atoms include aliphatic dicarboxylic acids such as succinic acid, glutaric acid, adipic acid, and suberic acid, and adipic acid is preferable. One type of an α,ω-linear aliphatic dicarboxylic acid having 4 to 8 carbons may be used alone, or two or more types thereof may be used.

The dicarboxylic acid-derived structural unit may contain dicarboxylic acid other than α,ω-linear aliphatic dicarboxylic acid having 4 to 8 carbon atoms. Examples of other dicarboxylic acids include α,ω-linear aliphatic dicarboxylic acid having 9 to 12 carbon atoms, such as sebacic acid; phthalic acid compounds, such as isophthalic acid, terephthalic acid and orthophthalic acid; and naphthalene dicarboxylic acid compounds, such as 1,2-naphthalene dicarboxylic acid, 1,3-naphthalene dicarboxylic acid, 1,4-naphthalene dicarboxylic acid, 1,5-naphthalene dicarboxylic acid, 1,6-naphthalene dicarboxylic acid, 1,7-naphthalene dicarboxylic acid, 1,8-naphthalene dicarboxylic acid, 2,3-naphthalene dicarboxylic acid, 2,6-naphthalene dicarboxylic acid, and 2,7-naphthalene dicarboxylic acid, and one type thereof can be used, or two or more types can be mixed and used.

In the present embodiments, sebacic acid is preferable when the oxygen barrier resin X contains dicarboxylic acid other than the α,ω-linear aliphatic dicarboxylic acid having 4 to 8 carbon atoms. The proportion of sebacic acid is preferably 1 to 30 mol% and more preferably 5 to 25 mol% of all dicarboxylic acid units constituting the oxygen barrier resin X.

In the present embodiments, in particular, it is preferable that the oxygen barrier resin X includes a diamine-derived structural unit and a dicarboxylic acid-derived structural unit, 70 mol% or more of the diamine-derived structural unit is derived from m-xylylenediamine, and 70 mol% or more of the dicarboxylic acid-derived structural unit is derived from adipic acid. In addition, the proportion of sebacic acid may be preferably 1 to 30 mol%, more preferably 5 to 25 mol% of the dicarboxylic acid component

In addition to the oxygen barrier resin X, the above-described polyamide resin (a1) may be blended. In this case, the proportion of the polyamide resin (a1) in the barrier layer is preferably 1 to 30 mass%, more preferably 5 to 25 mass%.

The barrier layer may contain a plasticizer, an elastomer, an antioxidant, a heat stabilizer, an ultraviolet absorber, a light stabilizer, a lubricant, an inorganic filler, an antistatic agent, a flame retardant, and the like. The content of these components is preferably 10 mass% or less of the barrier layer.

When the multilayer film of the present embodiments has a barrier layer, the thickness thereof is preferably 1 μm or more, more preferably 5 μm or more, still more preferably 10 μm or more, and is preferably 200 μm or less, more preferably 100 μm or less.

For details of the adhesive layer, reference can be made to the disclosures in paragraph [0015] of JP 2012-035504 A and paragraph [0043] of WO 2015/083558, the contents of which are incorporated herein by reference.

As for the oxygen permeable layer, reference can be made to the disclosure of paragraphs [0011] to [0014] of WO 2015/083558, the contents of which are incorporated herein by reference.

Examples of the metal deposited layer include an aluminum deposited layer. For details of the metal deposited layer, reference can be made to the descriptions of WO 2018/083962, the contents of which are incorporated in the present specification by reference.

An example of the multilayer film of the present embodiments is a multilayer film in which the other layer includes a barrier layer, the barrier layer including an oxygen barrier resin composition including a diamine-derived structural unit and a dicarboxylic acid-derived structural unit, 70 mol% or more of the diamine-derived structural unit being derived from xylylenediamine, 70 mol% or more of the dicarboxylic acid-derived structural unit being derived from adipic acid, the stretched film of the present embodiments includes polyamide 6 and a polyamide resin including a diamine-derived structural unit and a dicarboxylic acid-derived structural unit, 70 mol% or more of the diamine-derived structural unit being derived from m-xylylenediamine, and the barrier layer is in contact with the stretched film. Such a multilayer film is preferable because adhesion between the barrier layer and the stretched film is high. In addition, the barrier layer and the stretched film are preferably stretched at the same stretch ratio. The same stretch ratio is achieved, for example, by simultaneously stretching the barrier layer and the stretched film of the present embodiment.

The multilayer film can be produced in accordance with a known method. For example, a method in which a polymer constituting each layer is melted using a separate extruder to produce a multilayer film by co-extrusion from one die, a method in which a polymer constituting each layer is separately melt-extruded into a film shape and then laminated by a lamination method, and a method in which these methods are combined can be employed.

In the present embodiments, a multilayer film may be formed and then stretched. As the stretching method in this case, a flat-type sequential biaxial stretching method, a flat-type simultaneous biaxial stretching method, a tubular method, or another method can be used to produce the multilayer film, and the flat-type sequential biaxial stretching method is preferable.

More specifically, raw material resins are melt-extruded from two extruders by a co-extrusion method, joined by a feed block, extruded in a film shape from a die, supplied onto a cooling roll and cooled to obtain an unstretched film having a multilayer structure. At that time, a resin melting temperature in each extruder can be arbitrarily selected in a range of the melting point of the resin constituting each layer +10°C to 50°C. The obtained unstretched multilayer film is guided to a roll-type longitudinal stretching machine, stretched in a longitudinal direction using a speed difference between rolls, then introduced into a tenter-type lateral stretching machine, laterally stretched, and then subjected to heat fixation and relaxation treatment, whereby a multilayer stretched film can be obtained.

In the present embodiments, an aspect is exemplified in which an unstretched film containing the polyamide resins (a1) and (a2) and the barrier layer are co-extruded and stretched, and then the sealant layer is provided.

The stretch ratio is preferably in the same range as the value described above for the stretched film.

The multilayer film of the present embodiments may be subjected to a heat treatment or a humidity control treatment depending on the application. For these details, reference can be made to the disclosures in paragraph [0049] of WO 2021/070500, the contents of which are incorporated herein by reference.

When a multilayer film is formed after an unstretched polyamide film is formed into another layer, reference can be made to the disclosures in paragraphs [0080] to [0092] of WO 2017/073560, paragraph [0049] of WO 2021/070500, and paragraphs [0046] to [0050] of WO 2021/070500, the contents of which are incorporated herein by reference.

With respect to the production of a stretched film and the production of a multilayer film, reference can be made to the disclosures in paragraphs [0025] to [0030] of JP 2019-208687 A1 within a range not departing from the gist of the present invention, the contents of which are incorporated herein by reference.

<Applications>

The stretched film or the multilayer film of the present embodiments is preferably used as a packaging material. Examples of the packaging material of the present embodiments include packaging materials for food, medical treatment, and cosmetics. The packaging material of the present embodiments also includes a packaging container.

Examples of the content that can be filled or packaged in the packaging material of the present embodiments include confectioneries such as rice confectionery, bean confectionery, nuts, biscuit, cookie, wafers, marshmallow, pie, rare cake, candy, and snack; staples such as bread, snack noodle, instant noodle, dried noodle, pasta, sterile packaged cooked rice, rice porridge, rice gruel, packaged rice cake, and cereal foods; agricultural processed foods such as pickle, boiled bean, natto (fermented soybean), miso, freeze-dried tofu, frozen tofu, tofu, nametake, konjak, processed wild vegetable products, jams, peanut cream, salad, frozen vegetables, and processed potato products; processed livestock products such as ham, bacon, sausage, processed chicken products, and corned beef; processed marine products such as fish meat ham, fish meat sausage, fish paste products, boiled fish paste, toasted layer, soy-boiled foods, dried bonito, salted fish gut, smoked salmon and salted cod roe; fruits such as peach, orange, pineapple, mango, apple, pear, and cherry; vegetables such as corn, asparagus, mushroom, onion, carrot, radish, and potato; cooked foods such as frozen daily dishes and chilled daily dishes represented by hamburger, meat ball, fried sea foods, gyoza (dumpling stuffed with minced pork), croquette, and the like; dairy products such as butter, margarine, cheese, cream, instant creamy powder, and childcare conditioned powdered milk; foods such as liquid seasonings, retort curry, and pet foods; tobaccos; disposable thermal body pads; drugs; cosmetics; and batteries.

Examples

The present invention will be described more specifically with reference to examples below. Materials, amounts used, proportions, processing details, processing procedures, and the like described in the following examples can be appropriately changed as long as they do not depart from the spirit of the present invention. Thus, the scope of the present invention is not limited to the specific examples described below. If a measuring device used in the examples is not readily available due to discontinuation or the like, another device with equivalent performance can be used for measurement.

1. Raw material

<Sealant layer>

Bio-based LLDPE: biomass linear low density polyethylene (Bio-LLDPE), manufactured by Braskem. S. A, SLL118
Petroleum-based PP: petroleum-based polypropylene, manufactured by Japan Polypropylene Corporation, FY6
Petroleum-based LLDPE: petroleum-based low density polyethylene, manufactured by Japan Polyethylene Corporation, Novatec UF421

<Stretched film>

MXD 10: synthesized according to the following Synthesis Example.

<<Synthesis of MXD10>>

Sebacic acid (manufactured by Casda Biomaterials Co., Ltd.) was placed in a jacketed reactor equipped with an agitator, a partial condenser, a cooler, a thermometer, a dripping tank, and a nitrogen gas introduction tube, sufficiently purged with nitrogen, heated and melted at 170°C, and then the temperature was raised to 240°C while gradually dropping m-xylylenediamine (MXDA manufactured by Mitsubishi Gas Chemical Company, Inc.) so that the molar ratio with sebacic acid was 1:1 while stirring the content. After completion of the dropwise addition, the temperature was raised to 260°C and continued for 20 minutes. Thereafter, an internal pressure of a reaction system was continuously reduced to 0.08 MPa, and then the reaction was continued. After completion of the reaction, by application of a pressure of 0.2 MPa using a nitrogen gas in the reactor, the polymer was taken out as a strand from a nozzle at a lower part of a polymerization tank and cooled with water, and the strand was then pelletized with a pelletizer. The obtained pellet was dried in a vacuum dryer at 160°C for 3 hours and then used. The relative viscosity was 2.6.
MP10 (30): synthesized according to the following Synthesis Example.

<<Synthesis of MP10 (P30)>>

Sebacic acid (manufactured by Casda Biomaterials Co., Ltd.) was placed in a jacketed reactor equipped with an agitator, a partial condenser, a cooler, a thermometer, a dripping tank, and a nitrogen gas introduction tube, sufficiently purged with nitrogen, heated and melted at 170°C, and then the temperature was raised to 240°C while gradually dropping a mixed amine of m-xylylenediamine and p-xylylenediamine (70:30) (MPXDA manufactured by Mitsubishi Gas Chemical Company, Inc.) so that the molar ratio with sebacic acid was 1:1 while stirring the content. After completion of the dropwise addition, the temperature was raised to 260°C and continued for 20 minutes. Thereafter, the internal pressure of the reaction system was continuously reduced to 0.08 MPa, and then the reaction was continued. After completion of the reaction, by application of a pressure of 0.2 MPa using a nitrogen gas in the reactor, the polymer was taken out as a strand from a nozzle at a lower part of the polymerization tank and cooled with water, and the strand was then pelletized with a pelletizer to obtain a pellet. The obtained pellet was dried in a vacuum dryer at 180°C for 2 hours and then used. The relative viscosity was 2.6.

PA6: polyamide 6, manufactured by Ube Industries, Ltd., UBE NYLON 1022B
PA666: polyamide 6/66, copolymer containing polyamide 6 component and polyamide 66 component, manufactured by Ube Industries, Ltd., UBE NYLON 5023B
MXD6: polyamide resin synthesized from m-xylylenediamine and adipic acid, manufactured by Mitsubishi Gas Chemical Company, Inc., S6011
PA11 and PA1010: synthesized according to the following Synthesis Example.

<<Synthesis of PA11>>

Aminoundecanoic acid (manufactured by Tokyo Chemical Industry) was placed in a jacketed reactor equipped with an agitator, a partial condenser, a cooler, a thermometer, a dripping tank, and a nitrogen gas introduction tube, and sufficiently purged with nitrogen, and the temperature was raised to 220°C and continued for 20 minutes while stirring the content. Thereafter, the internal pressure of the reaction system was continuously reduced to 0.08 MPa, and then the reaction was continued. After completion of the reaction, by application of a pressure of 0.2 MPa using a nitrogen gas in the reactor, the polymer was taken out as a strand from a nozzle at a lower part of the polymerization tank and cooled with water, and the strand was then pelletized with a pelletizer to obtain a pellet. The obtained pellet was dried in a vacuum dryer at 90°C for 6 hours and then used.

<<Synthesis of PA1010>>

Sebacic acid (manufactured by Casda Biomaterials Co., Ltd.) was placed in a jacketed reactor equipped with an agitator, a partial condenser, a cooler, a thermometer, a dripping tank, and a nitrogen gas introduction tube, sufficiently purged with nitrogen, heated and melted at 100°C, and then the temperature was raised to 180°C while gradually dropping 1,10-diaminodecane so that the molar ratio with sebacic acid was 1:1 while stirring the content. After completion of the dropwise addition, the temperature was raised to 220°C and continued for 20 minutes. Thereafter, the internal pressure of the reaction system was continuously reduced to 0.08 MPa, and then the reaction was continued. After completion of the reaction, by application of a pressure of 0.2 MPa using a nitrogen gas in the reactor, the polymer was taken out as a strand from a nozzle at a lower part of the polymerization tank and cooled with water, and the strand was then pelletized with a pelletizer to obtain a pellet. The obtained pellet was dried in a vacuum dryer at 90°C for 6 hours and then used.

<Barrier layer>

EVOH: ethylene-vinyl alcohol copolymer, manufactured by Kuraray Co., Ltd., EVAL F104B
MXD6: polyamide resin synthesized from m-xylylenediamine and adipic acid, manufactured by Mitsubishi Gas Chemical Company, Inc., S6011
MXD610: synthesized according to the following Synthesis Example.
MXD610 (sebacic acid (SA) 20 mol%): synthesized according to the following Synthesis Example.

<<Synthesis Example of MXD610 (SA 20 mol%)>>

In a reaction container with a stirrer, a partial condenser, a total condenser, a thermometer, a dropping funnel, a nitrogen gas introduction tube, and a strand die, 10000 g (68 mol) of weighed adipic acid, 3460 g (17.1 mol) of sebacic acid, 0.38 g of sodium hypophosphite monohydrate ($NaH_2PO_2 \cdot H_2O$) (5 ppm by mass in terms of the phosphorus atom concentration in the polyamide resin), and 0.15 g of sodium acetate were blended, and sufficiently purged with nitrogen, after which the reaction container was filled with nitrogen to an internal pressure of 0.4 MPa, and the inside of the system was heated to 190°C while stirring under a small nitrogen gas flow.

To this, 11813 g (87 mol) of m-xylylenediamine was added dropwise under stirring, and the temperature inside the system was continuously increased while removing condensed water that was produced, to outside of the system. After dropwise addition of the meta-xylylenediamine was completed, the internal temperature was increased, and when the temperature reached 255°C, the pressure inside the reaction container was reduced. The internal temperature was then further increased, and a melt polycondensation reaction was continued for 10 minutes at 260°C. Subsequently, the inside of the system was pressurized with nitrogen, the obtained polymer was removed from the strand die and pelletized, and polyamide MXD610 (SA 20 mol%) was thereby obtained.

MXD10: MXD10 obtained in <Synthesis of MXD10> was used.

2. Measurement method

<Transparency (stretched film, multilayer film)>

The haze (unit: %) of the multilayer film obtained above was measured using a color/turbidity simultaneous measuring device.

"COH400" manufactured by Nippon Denshoku Industries Co., Ltd. was used as the color/turbidity simultaneous measuring device.

Evaluation was made as follows.

<<Stretched film>>

A: less than 1.0%
B: 1.0% or more and less than 1.3%
C: 1.3% or more and less than 2.0%
D: 2.0% or more

<<Multilayer film>>

A: less than 8.0%
B: 8.0% or more

<Shrinkage ratio (stretched film)>

A square having a side of 100 mm and its diagonal line were written with an oil-based pen in a central part of the stretched film, and the length of each side of the square was measured up to one decimal place. The stretched film was immersed in an autoclave filled with water, and heated at 100°C for 30 minutes. The heated and cooled film was taken out, the lengths of the square and the diagonal line written in advance were measured, and the shrinkage ratio was calculated using an initial length and a length after heating.

Shrinkage ratio = (initial length - length after heating)/initial length $\times$ 100)

A: less than 10.0%
B: 10.0% or more

<Water absorption rate (stretched film)>

The stretched film was allowed to stand in an environment of 50°C and a relative humidity of 90%, and a moisture content after one month had elapsed was measured at a vaporization temperature of 185°C using a moisture content meter (automatic sampler moisture meter CA-310 manufactured by Nittoseiko Analytech Co., Ltd.).

A: less than 1.8%
B: 1.8% or more and less than 2.5%
C: 2.5% or more

<Oxygen barrier properties (stretched film)>

The oxygen transmission rate (OTR) of the stretched film was measured using an isobaric method in an atmosphere at 23°C and 60% relative humidity (RH), and the oxygen transmission coefficient (OTC) was calculated from the measurement results (unit: cc·mm/m$^2$·atm·day). The pressure under an oxygen atmosphere was set to 1 atm, and the measurement time was 24 hours. The oxygen transmission coefficient (OTC) was calculated as follows.

$$OTC = OTR \times Measured\ Film\ Thickness\ (\mu m)/1000$$

The oxygen transmission rate (OTR) was measured using an oxygen transmission rate measuring device (product name: "OX-TRAN (trade name) 2/21", available from MOCON Inc.).

A: less than 0.52 cc·mm/m$^2$·atm·day

B: 0.52 cc·mm/m²·atm·day or more and less than 1.0 cc·mm/m²·atm·day

C: 1.0 cc·mm/m²·atm·day or more

<Pinhole resistance, 3000 times/number of holes (stretched film)>

The stretched film was cut into 25 cm square and fixed to a pinhole resistance tester, and the film was bent for 3000 times by continuously subjecting the film to 440° twisting motion and 65 mm linear motion at a rate of 40 times/min. The number of pinholes of the film after bending was measured by using a pinhole inspection machine to calculate the number of pinholes per 100 cm² of the film. Note that the number of pinholes per 100 cm² of the film is calculated as described below.

Number of pinholes (number/100 cm²) = total number of pinholes (number)/effective area tested (cm²) × 100

In the present examples, Gelbo Flex Tester, available from Rigaku Kogyo, was used as the pinhole resistance tester. Poroscope DC, available from Fischer, was used as the pinhole inspection machine.

A: 5 or less

B: 6 or more and 10 or less

C: 11 or more

<Easy tearability (multilayer film)>

A straight line was drawn in MD (machine direction) of the multilayer film obtained above, and two straight lines were drawn in TD (transverse direction). A distance between the two straight lines in TD was 20 cm. A deviation width (unit: mm) in TD when the film was torn by 20 cm in MD was defined as linear cuttability. Evaluation was made as follows.

A: less than 3 mm

B: 3 mm or more and 5 mm or less

C: more than 5 mm

3. Examples 1 to 11, Comparative Examples 1 to 6

<Production of stretched film>

Two or three of the polyamide resins (a1), (a2), and (a3) indicated in Tables 1 to 3 were dry-blended, then fed to a single screw extruder equipped with a T die (PTM-30, manufactured by PLABOR Research Laboratory of Plastics Technology Co., Ltd.), and kneaded. The mixture was melt-extruded from the die at an extrusion temperature of 260°C. Specifically, the resin composition obtained by melt-kneading the components was extruded, and a film having a width of 175 mm and a thickness of 140 um was obtained. The obtained film was cut into a 112 mm square. Thereafter, by using a batch-type biaxial stretching machine (tenter method; EX105-S5, manufactured by Toyo Seiki Seisaku-sho, Ltd.), stretching was performed in MD and TD in air atmosphere at 100°C in a manner that the stretch ratio was 2.5 times in MD, the stretch ratio was 2.5 times in TD, and the total stretch ratio was 6.25 times, and thus a stretched film having a thickness of 20 um was obtained. During this stretching process, 2.5% of MD relaxation percentage and 2.5% of TD relaxation percentage were provided in the middle of the process. After the stretching, heat fixation was performed. The heat fixation temperature was 170°C, and the heat fixation time was 45 seconds.

The transparency, shrinkage ratio, water absorption rate, oxygen barrier properties, and pinhole resistance of the obtained stretched film were measured according to the above-described methods.

<Production of multilayered film>

The obtained polyamide resins (a1), (a2), and (a3) were dry-blended so that the amounts were as indicated in the following table, and the barrier resin was formed into a multilayer structure (multilayer film) containing a polyamide resin layer/barrier layer at an extrusion temperature of 240°C and a post-lamination flow path temperature of 240°C using two single screw extruders (manufactured by PLABOR Research Laboratory of Plastics Technology Co., Ltd., screw diameter: 40 mm) and a multilayer film molding machine equipped with a flow path for forming a multilayer structure so as to be a two-types and two-layers T-die. The thickness of the polyamide resin layer was 130 μm, the thickness of the barrier layer was 70 um, and the total thickness of the multilayer film was 200 μm. The obtained multilayer film was cut into 120 mm square. Thereafter, by using a batch-type biaxial stretching machine (tenter method; EX10-S5, manufactured by Toyo Seiki Seisaku-sho, Ltd.), while heating is performed in air atmosphere at 100°C, stretching was performed in MD and TD in a manner that the stretch ratio was 2.5 times in MD, the stretch ratio was 2.5 times in TD, and the total stretch ratio was 6.25 times, and thus a stretched film having a thickness of about 30 μm was obtained. During this stretching process, relaxation operation was performed in the middle of the process in a manner that the MD relaxation percentage was 2.5% and the TD relaxation percentage was 2.5%. After the stretching, heat fixation was performed. The heat fixation temperature was 170°C, and the heat fixation time was 45 seconds to obtain a stretched multilayer film (polyamide resin layer/barrier layer).

Separately, the resin to be used for the sealant layer was supplied to a single screw extruder with a T-die (PTM-30 manufactured by PLABOR Research Laboratory of Plastics Technology Co., Ltd.), and melt-extruded from a die at an extrusion temperature of 220°C. Specifically, the resin composition obtained by melt-kneading the components was extruded, and a film for a sealant layer having a width of 175 mm and a thickness of 70 μm was obtained.

An adhesive was applied to a surface of the obtained film for a sealant layer, and the sealant layer film and the stretched multilayer film (the polyamide resin layer side of the multilayer film containing polyamide resin layer/barrier layer) were subjected to a dry lamination treatment using a laminator device ("Halder Laminator MRK" manufactured by MKS Instruments) to obtain a multilayer film (about 100 um thick) containing sealant layer/adhesive layer/polyamide resin layer/barrier layer.

The transparency and the easy tearability of the obtained multilayer film were measured according to the above-described method.

3. Reference Examples 1 and 2

<Production of stretched film>

A stretched film was produced in the same manner as in Example 1 with the exception that the type of polyamide resin was changed as indicated in Table 3.

The transparency, shrinkage ratio, water absorption rate, oxygen barrier properties, and pinhole resistance of the obtained stretched film were measured according to the above-described methods.

<Production of multilayered film>

A sealant layer film was bonded to the stretched film in the same manner as in Example 1 to form a multilayer film.

The transparency and the easy tearability of the obtained multilayer film were measured according to the above-described method.

[Table 1]

| | | Example 1 | Example 2 | Example 3 | Example 4 | Example 5 | Example 6 | Example 7 |
|---|---|---|---|---|---|---|---|---|
| Sealant layer | Resin | Bio-based LLDPE | Bio-based LLDPE | Petroleum-based PP | Petroleum-based LLDPE | Bio-based LLDPE | Bio-based LLDPE | Bio-based LLDPE |
| Stretched film | Resin (a1) | MXD10 | MXD10 | MXD10 | MXD10 | MXD10 | MP10 (30) | MXD10 |
| | Resin (a2) | PA6 | PA6 | PA6 | PA6 | PA6 | PA6 | PA6 |
| | Resin (a3) | - | - | - | - | - | - | - |
| | Mass ratio (a1/a2/a3) | 5/95/0 | 15/85/0 | 15/85/0 | 19/81/0 | 30/70/0 | 15/85/0 | 15/85/0 |
| Barrier layer | Barrier resin | MXD6 | MXD6 | MXD6 | MXD6 | MXD6 | MXD6 | EVOH |
| Transparency (stretched film) | | A | A | A | B | C | A | A |
| Transparency (multilayer film) | | A | A | A | A | A | A | A |
| Shrinkage ratio (stretched film) | | A | A | A | A | A | A | A |

(continued)

| | Example 1 | Example 2 | Example 3 | Example 4 | Example 5 | Example 6 | Example 7 |
|---|---|---|---|---|---|---|---|
| Water absorption rate (stretched film) | B | A | A | A | A | A | A |
| Oxygen barrier properties (stretched film) | A | A | A | A | B | A | A |
| Pinhole resistance 3000 times/number of holes (stretched film) | A | A | A | A | B | A | A |
| Easy tearability (multilayer film) | B | A | A | A | A | A | A |

[Table 2]

| | | Example 8 | Example 9 | Example 10 | Example 11 | Comparative Example 1 | Comparative Example 2 |
|---|---|---|---|---|---|---|---|
| Sealant layer | Resin | Bio-based LLDPE | Bio-based LLDPE | Bio-based LLDPE | Bio-based LLDPE | Bio-based LLDPE | Bio-based LLDPE |
| Stretched film | Resin (a1) | MXD10 | MXD10 | MXD10 | MXD10 | - | - |
| | Resin (a2) | PA6 | PA6 | PA6 | PA666 | PA6 | PA6 |
| | Resin (a3) | MXD6 | - | - | - | MXD6 | PA11 |
| | Mass ratio (a1/a2/a3) | 11/85/4 | 15/85/0 | 15/85/0 | 15/85/0 | 0/5/95 | 0/85/15 |
| Barrier layer | Barrier resin | MXD6 | MXD610 (SA 20 mol%) | MXD6 + MXD10 (80/20) | MXD6 | MXD6 | MXD6 |
| Transparency (stretched film) | | C | B | A | B | C | D |
| Transparency (multilayer film) | | A | A | A | A | B | B |
| Shrinkage ratio (stretched film) | | A | A | A | A | B | A |
| Water absorption rate (stretched film) | | A | A | A | A | C | A |
| Oxygen barrier properties (stretched film) | | A | A | A | A | A | B |
| Pinhole resistance 3000 times/ number of holes (stretched film) | | A | A | A | A | B | A |
| Easy tearability (multilayer film) | | A | A | A | A | B | A |

[Table 3]

| | | Comparative Example 3 | Comparative Example 4 | Comparative Example 5 | Comparative Example 6 | Reference Example 1 | Reference Example 2 |
|---|---|---|---|---|---|---|---|
| Sealant layer | Resin | Bio-based LLDPE | Bio-based LLDPE | Bio-based LLDPE | Bio-based LLDPE | Bio-based LLDPE | Bio-based LLDPE |

(continued)

| | | Comparative Example 3 | Comparative Example 4 | Comparative Example 5 | Comparative Example 6 | Reference Example 1 | Reference Example 2 |
|---|---|---|---|---|---|---|---|
| Stretched film | Resin (a1) | - | MXD10 | MXD10 | - | - | - |
| | Resin (a2) | PA6 | PA6 | - | PA6 | PA6 | PA666 |
| | Resin (a3) | PA1010 | - | PA1010 | MXD6 | - | - |
| | Mass ratio (a1/a2/a3) | 0/85/15 | 50/50/0 | 15/0/85 | 0/80/20 | - | - |
| Barrier layer | Barrier resin | MXD6 | MXD6 | MXD6 | MXD6 | - | - |
| Transparency (stretched film) | | D | D | D | D | A | A |
| Transparency (multilayer film) | | B | B | B | B | A | A |
| Shrinkage ratio (stretched film) | | A | A | A | A | B | B |
| Water absorption rate (stretched film) | | A | A | A | C | C | C |
| Oxygen barrier properties (stretched film) | | B | B | C | A | A | A |
| Pinhole resistance 3000 times/number of holes (stretched film) | | A | C | A | B | A | A |
| Easy tearability (multilayer film) | | A | A | A | A | C | C |

As is clear from the above results, the stretched film of the present invention was excellent in transparency. Further, the stretched film has a small shrinkage ratio during stretching, a low water absorption rate, excellent oxygen barrier properties, and excellent pinhole resistance.

Furthermore, the multilayer film of the present invention was excellent in transparency and also in easy tearability.

Reference Signs List

1　Sealant layer

2　Stretched film

3　Barrier layer

## Claims

**1.** A stretched film comprising a polyamide resin (a1) and a polyamide resin (a2),

wherein the polyamide resin (a1) comprises a diamine-derived structural unit and a dicarboxylic acid-derived structural unit, 70 mol% or more of the diamine-derived structural unit being derived from xylylenediamine, 70 mol% or more of the dicarboxylic acid-derived structural unit being derived from sebacic acid, and
the polyamide resin (a2) comprises 35 mol% or more of all structural units each comprising a structural unit having a linear alkylene group that is derived from a monomer having 5 to 7 carbon atoms,
wherein a mass ratio of the polyamide resin (a1) to the polyamide resin (a2) is from 5/95 to 30/70.

2. The stretched film according to claim 1, wherein the structural unit having a linear alkylene group in the polyamide resin (a2) is at least one selected from -[NH(CH$_2$)$_{n1}$CO]-, - [NH(CH$_2$)$_{n2}$NH]-, and -[CO(CH$_2$)$_{n3}$CO]-, where n1 is an integer from 4 to 6, n2 is an integer from 5 to 7, and n3 is an integer from 3 to 5.

3. The stretched film according to claim 1 or 2, wherein the polyamide resin (a1) comprises the diamine-derived structural unit and the dicarboxylic acid-derived structural unit, 70 mol% or more of the diamine-derived structural unit being derived from m-xylylenediamine.

4. The stretched film according to any one of claims 1 to 3, wherein the polyamide resin (a2) comprises polyamide 6.

5. The stretched film according to any one of claims 1 to 4, wherein the polyamide resin (a2) comprises polyamide 6/66.

6. The stretched film according to any one of claims 1 to 5, wherein a mass ratio of the polyamide resin (a1) to the polyamide resin (a2) is from 5/95 to 19/81.

7. The stretched film according to any one of claims 1 to 6, which is a uniaxially stretched film.

8. The stretched film according to any one of claims 1 to 6, which is a biaxially stretched film.

9. The stretched film according to claim 7 or 8, which is an easily tearable film.

10. A multilayer film comprising the stretched film according to any one of claims 7 to 9 and an other layer.

11. The multilayer film according to claim 10, wherein the other layer comprises a sealant layer.

12. The multilayer film according to claim 11, wherein the other layer comprises a barrier layer, and the sealant layer, the stretched film, and the barrier layer are stacked in this order, the stretched film being a biaxially stretched film.

13. The multilayer film according to claim 10, wherein

the other layer comprises a barrier layer, the barrier layer comprising an oxygen barrier resin comprising a diamine-derived structural unit and a dicarboxylic acid-derived structural unit, 70 mol% or more of the diamine-derived structural unit being derived from xylylenediamine, 70 mol% or more of the dicarboxylic acid-derived structural unit being derived from adipic acid;
the stretched film comprises polyamide 6 and a polyamide resin comprising a diamine-derived structural unit and a dicarboxylic acid-derived structural unit, 70 mol% or more of the diamine-derived structural unit being derived from m-xylylenediamine; and
the barrier layer is in contact with the stretched film.

14. The multilayer film according to claim 13, wherein the barrier layer and the stretched film are stretched at the same stretch ratio.

15. A packaging material comprising a stretched film according to any one of claims 1 to 9 or a multilayer film according to any one of claims 10 to 14.

FIG. 1

## INTERNATIONAL SEARCH REPORT

| | International application No. |
|---|---|
| | **PCT/JP2022/019718** |

**A.    CLASSIFICATION OF SUBJECT MATTER**

*C08J 5/18*(2006.01)i; *B32B 27/00*(2006.01)i; *B32B 27/34*(2006.01)i; *B65D 65/40*(2006.01)i; *C08L 77/00*(2006.01)i
FI:   C08J5/18; B32B27/00 H; B32B27/34; B65D65/40 D; C08L77/00

According to International Patent Classification (IPC) or to both national classification and IPC

**B.    FIELDS SEARCHED**

Minimum documentation searched (classification system followed by classification symbols)

C08J5/00 - 5/02, C08J5/12 - 5/22, B32B1/00 - 43/00, C08K3/00 - 13/08, C08L1/00 - 101/14, B65D65/00 - 65/46

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2014-213595 A (KURIRON KASEI KK) 17 November 2014 (2014-11-17) claims, paragraphs [0007], [0011], [0015], [0019], [0021]-[0023], [0032], [0036], examples | 1-11, 15 |
| Y | | 12-14 |
| Y | JP 05-156155 A (MITSUBISHI GAS CHEMICAL COMPANY, INC.) 22 June 1993 (1993-06-22) claims, paragraphs [0001], [0004], [0012], [0018], [0020], examples | 12-14 |
| A | | 1-11, 15 |
| A | JP 2012-031403 A (MITSUBISHI GAS CHEMICAL CO., INC.) 16 February 2012 (2012-02-16) entire text | 1-15 |
| A | WO 2016/181745 A1 (MITSUBISHI GAS CHEMICAL CO., INC.) 17 November 2016 (2016-11-17) entire text | 1-15 |

☑ Further documents are listed in the continuation of Box C.          ☑ See patent family annex.

| | |
|---|---|
| *     Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **19 July 2022** | **02 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/019718**

**C.      DOCUMENTS CONSIDERED TO BE RELEVANT**

| Category* | Citation of document, with indication, where appropriate, of the relevant passages | Relevant to claim No. |
|---|---|---|
| A | JP 2017-066388 A (OKURA INDUSTRIAL CO., LTD.) 06 April 2017 (2017-04-06)<br>        entire text | 1-15 |
| A | WO 2017/094564 A1 (MITSUBISHI GAS CHEMICAL CO., INC.) 08 June 2017 (2017-06-08)<br>        entire text | 1-15 |
| A | JP 2014-240145 A (UBE INDUSTRIES, LTD.) 25 December 2014 (2014-12-25)<br>        entire text | 1-15 |
| A | WO 2001/068363 A1 (CRYOVAC, INC.) 20 September 2001 (2001-09-20)<br>        entire document | 1-15 |

Form PCT/ISA/210 (second sheet) (January 2015)

INTERNATIONAL SEARCH REPORT
Information on patent family members

International application No.

**PCT/JP2022/019718**

| Patent document cited in search report | | | Publication date (day/month/year) | Patent family member(s) | | | Publication date (day/month/year) |
|---|---|---|---|---|---|---|---|
| JP | 2014-213595 | A | 17 November 2014 | (Family: none) | | | |
| JP | 05-156155 | A | 22 June 1993 | (Family: none) | | | |
| JP | 2012-031403 | A | 16 February 2012 | US entire document WO entire document EP entire document | 2013/0078402 2012/005204 2570459 | A1 A1 A1 | |
| WO | 2016/181745 | A1 | 17 November 2016 | US entire document EP entire document | 2018/0345621 3296098 | A1 A1 | |
| JP | 2017-066388 | A | 06 April 2017 | (Family: none) | | | |
| WO | 2017/094564 | A1 | 08 June 2017 | US entire document EP entire document | 2018/0257354 3385074 | A1 A1 | |
| JP | 2014-240145 | A | 25 December 2014 | (Family: none) | | | |
| WO | 2001/068363 | A1 | 20 September 2001 | US entire document EP entire document | 2004/0009360 1276609 | A1 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021070500 A
- JP 5051525 A
- WO 2017010390 A
- WO 2015083558 A
- JP 2012035504 A
- WO 2018083962 A
- WO 2017073560 A
- JP 2019208687 A